# EUROPEAN PATENT APPLICATION

(11) **EP 3 909 812 A1**
(43) Date of publication of application: **17.11.2021**
(21) Application number: 20859633.8
(22) Date of filing: 30.03.2020
(51) Int. Cl.: B60R 13/02, D04B 21/00

(54) **LIGHT-TRANSMITTING FABRIC, ARTIFICIAL LEATHER AND AUTOMOBILE INTERIOR TRIM**

(71) Applicant: Canadian General-Tower (Changshu) Co., Ltd, Changshu Jiangsu 215533 (CN)
(72) Inventor: YU, Dongqing, Canton, MI 48187 (US); SONG, Weifeng, Changshu, Jiangsu 215533 (CN)
(74) Representative: Barker Brettell LLP
(86) International application number: PCT/CN2020/082137
(87) International publication number: WO 2021/195864

(57) **Abstract**

The invention comprises a light-transparent fabric, as may be affixed to an artificial leather or incorporated in an automotive interior. The light-transparent fabric consists of two fabric layers which are parallel to each other and spaced apart and a support layer which connects the two fabric layers together. The support layer is formed of connecting yarns, and the fabric layers are woven from fabric yarns. The meshes formed in the first fabric layer are the first meshes while the meshes formed in the second fabric layer are the second meshes, and 80%-100% of the first meshes align with the second meshes one by one; at least 80% of the support threads in the connecting yarns are arranged in the shape of an "I", and the ratio of the diameter of the connecting yarns to the diameter of the fabric yarns is 1.1:1.5. The light-transparent fabric has both high transmittance and high mechanical performance.

## Description

### Technical Field

The invention relates to the technical field of automotive interior materials, in particular to a kind of light-transparent fabric, that in one embodiment is affixed to an artificial leather, and said light-transparent fabric and artificial leather may be utilized as automotive interior.

### Background Art

To ensure the riding comfort, a sponge layer is provided on the inner side of the epidermal layer in an automotive interior for a soft touch, but owing to the poor elasticity, high mutability and low breathability of the sponge layer, a three-dimensional spacer fabric is used in place of sponges in more and more automotive interiors.

The three-dimensional spacer fabric is a 3D fabric and consists of two fabric layers and a support layer made of space yarns between the two fabric layers. The three-dimensional spacer fabric has advantages such as high compression elasticity, breathability, hygroscopicity, moisture transmissibility, structural integrity and formability.

With the increasingly higher demand for the quality and comfort of automobile interiors, artificial leather is no longer a clad material, while an increasing number of functions are waiting to be introduced into the development process of artificial leather, e.g., artificial leather with a measure of transmittance helps to improve the automotive interior atmosphere in backlight, as occurs when it is backlit. At present, the commonly used spacer fabrics are divided into the following types: V, X and IXI. Since the spacer yarn can form a stable triangular structure with the upper and lower fabric layers, the fabric layers can remain highly stable and pressure-resistant under a transverse load, with a certain spacing distance maintained between the two fabric layers. Owing to the above-mentioned arrangement of the spacer fabric, light directed at said spacer fabric is significantly weakened or even eliminated, such that the existing three-dimensional spacer fabrics has very poor transmittance of light. When the surface of the automotive frame or a part thereof is covered by such a three-dimensional spacer fabric, light from a light source directed at the automotive frame or part will hardly transmit through the three-dimensional spacer fabric, making it impossible to build a light-transparent usage scenario in an automotive interior that incorporates spacer fabric. Alternatively, to build a light-transparent usage scenario in an automotive interior the three-dimensional spacer fabric or sponge has to be removed, thus lowering the elasticity and sense of touch of the fabric used in the automotive interior.

### Summary of the Invention

Based on the above-referenced prior art, the main aim of the invention is to provide a light-transparent fabric, that may be affixed to an artificial leather and can be utilized in an automotive interior so as to improve the automotive interior atmosphere, whereby light is transmissible through the automotive interior.

To achieve the above aim, the invention adopts the following technical scheme:
In a first aspect, the invention provides a light-transparent fabric that consists of two fabric layers which are positioned parallel to each other and spaced apart, and a support layer which connects the two fabric layers together. The support layer is formed of connecting yarns. The connecting yarns consist of support threads sandwiched between the two fabric layers and connecting threads woven into the two fabric layers, respectively. The fabric layers are woven from fabric yarns and are woven to contain a number of meshes formed by the fabric yarns. The two fabric layers are referenced herein as the first fabric layer and the second fabric layer, and the meshes formed in the first fabric layer are the first meshes while the meshes formed in the second fabric layer are the second meshes. In the invention: the first meshes align with the second meshes on a one to one basis, or 80%-100% of the first meshes align with the second meshes on a one to one basis; at least 80% of the support threads in the connecting yarns are arranged in the shape of an "I"; and the ratio of the diameter of the connecting yarns to the diameter of the fabric yarns is 1.1:1.5.
In a preferred embodiment of the invention, the meshes are polygonal-shaped meshes, and there are at most 3 fabric yarns in in each side of the polygon-shape therein.
In a preferred embodiment of the invention, the fabric yarns and connecting yarns are both formed of transparent or semitransparent monofilaments.
In a preferred embodiment of the invention, the ratio of the maximum span size of the meshes to the diameter of the fabric yarns is 8:32.
In a preferred embodiment of the invention, the connecting threads in the connecting yarns stretch in zigzags along the sides of the polygon-shape of a polygon-shaped mesh.
In a preferred embodiment of the invention, the connecting threads stretch in zigzags along any side of the polygon-shape of a polygon-shaped mesh 4 times at the most.
In a preferred embodiment of the invention, the fabric yarns and connecting yarns are uncolored yarns.
In a preferred embodiment of the invention, the number of meshes is greater than 10 meshes.
In a preferred embodiment of the invention, the transmittance of the fabric yarns and the connecting threads ranges from 50% to 70%, respectively.
In a preferred embodiment of the invention, the fabric yarns and the connecting yarns are both made of polyethylene terephthalate (PET).
In a preferred embodiment of the invention, all of the support threads in the connecting yarns are arranged in the shape of and "I"; or alternatively, the support threads in the connecting yarns are divided into fist support threads and second support threads, and the first support threads are arranged in the shape of an "I" and the second support threads are arranged in the shape of a "V" and/or and "X".
In a preferred embodiment of the invention, the diameter of the fabric yarns ranges from 0.05mm to 0.1mm.
In a preferred embodiment of the invention, the diameter of the connecting yarns ranges from 0.055mm to 0.15mm.
In a preferred embodiment of the invention, the ratio of the thickness of the support layer to the diameter of the support threads is 6-55.
In a preferred embodiment of the invention, the thickness of the support layer ranges from 1mm to 3mm.
In a preferred embodiment of the invention, the transmittance of the light-transparent fabric is greater than or equal to 70%.
In a second aspect, the invention is an artificial leather that consists of monolayers of leather affixed to each other and to the light-transparent fabric as described herein.
In a third aspect, the invention is an automotive interior that contains the light-transparent fabric described herein, or the artificial leather described herein.
In the light-transparent fabric provided by the invention, the first meshes formed in one fabric layer are set to align, or approximately align, with the second meshes formed in the other fabric layer, so as to minimize the misalignment between the meshes on the two fabric layers, in order that more light can transmit through the light-transparent fabric. Most of the support threads are arranged in the shape of an "I" such that the support threads in the connecting yarns are roughly parallel to one another, and such that the support threads correspond to the junction between the first meshes and the second meshes, in order to make the support threads maximally brought down when seen in a direction perpendicular to the first fabric layer, for the purpose that more light can pass through the light-transparent fabric. Moreover, the toughness of the connecting yarns can be effectively improved by increasing the diameter of the connecting yarns, thereby ensuring the achievement of mechanical properties of the light-transparent fabric, and protecting the support threads from being deformed by a side force exerted thereupon.

Other beneficial effects of the invention will be described as specific embodiments of the invention in an introduction to the specific technical characteristics and technical scheme of the invention. Those skilled in the art will recognize the beneficial effects of the invention in light of the prior art, based upon such technical characteristics and technical scheme of the invention.

### Description of Drawings

The preferred embodiments of the invention are described herein in reference to the drawings as follow. In the drawings:
FIG. 1 shows a cross-sectional view of the light-transparent fabric in accordance with a preferred embodiment of the present invention;
FIG. 2 shows a structural diagram of four constituent units of the light-transparent fabric of the invention, wherein the first meshes align with the second meshes;
FIG. 3 shows a structural diagram of four constituent units of the light-transparent fabric of the invention, wherein the first meshes are misaligned with the second meshes;
FIG. 4 shows a schematic diagram of the alignment in a dimensional view of the invention.
FIG. 5 shows a structural diagram of two constituent units of the light-transparent fabric of the invention, wherein each of the first meshes and second meshes is hexagon-shaped;
FIG. 6 shows a top view of the first fabric layer of the light-transparent fabric of the invention, of a preferred embodiment of the invention;
FIG. 7 shows a schematic diagram of the connecting threads in the connecting yarns of the light-transparent fabric invention stretching in zigzags along the sides of a set of first meshes.

In some drawings the following are shown: a first fabric layer 100; first meshes 110; a second fabric layer 200; second meshes 210; a support layer 300; connecting yarns 310; support threads 311; connecting threads 312; fabric yarns 400.

### Specific Embodiments of the Invention

The invention is described below based on its various embodiments, however, there are more embodiments of the invention than are enumerated herein. In the detailed description of the invention herein, some specific details are described in detail. To avoid confusion regarding the essence of the invention, the methods, processes, procedures or components well known in the art are not described in detail herein.

In addition, those of ordinary skill in the art will recognize that all of the drawings provided herein are for illustration purposes only, and that the drawings are not necessarily drawn to scale.

Unless explicitly otherwise stated or contextually apparent, the terms "contain" and "include", as well as similar words and phrases, in herein should be interpreted as inclusive terms rather than exclusive or exhaustive terms; in other words, these terms, as well as similar words and phrases, mean "include but not limited to".

In the description of the invention, the terms "first" and "second" are applied for descriptive purposes only and do not indicate or imply relative importance. Moreover, in the description of the invention, the terms "a number of', "multiple", and "plurality" mean two or more.

The test method for "transmittance" described herein is as follows: ASTM E1348 (of ASTM International).

Considering the need for enabling artificial leather used as the surface of an automotive interior to transmit backlight for the purpose of improving the atmosphere of such interior, the invention herein addresses such need by enhancing the transmittance of three-dimensional spacer fabric.

In regards to the present problem created by the poor transmittance of existing three-dimensional spacer fabrics, these are caused by the following defects in the structure of the existing three-dimensional spacer fabrics:
1. The meshes on the two fabric layers misalign too severely with each other, and this hinders the propagation of light;
2. The spacer yarns cross one another, i.e., there are excessive spacer yarns in the meshes when seen from a direction perpendicular to the three-dimensional spacer fabric, which also hinders the propagation of light.

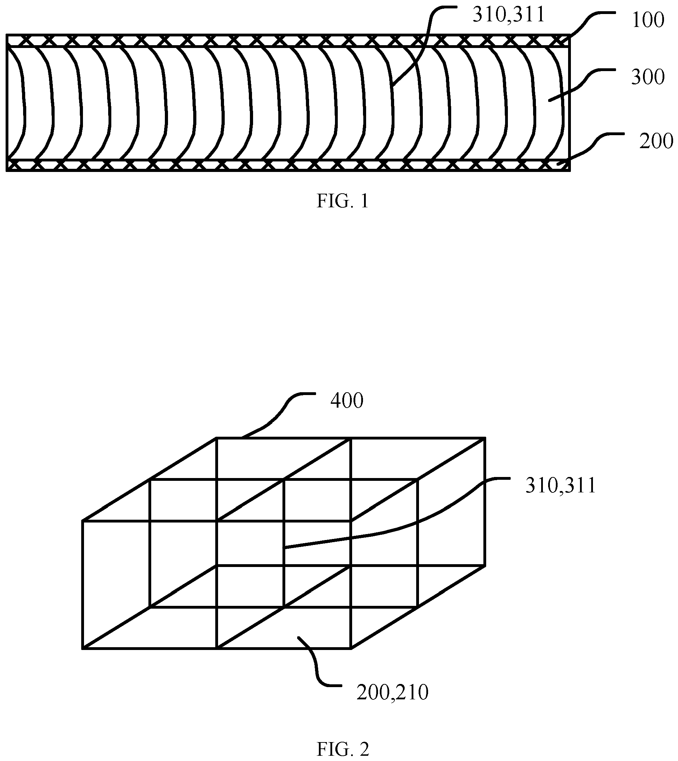

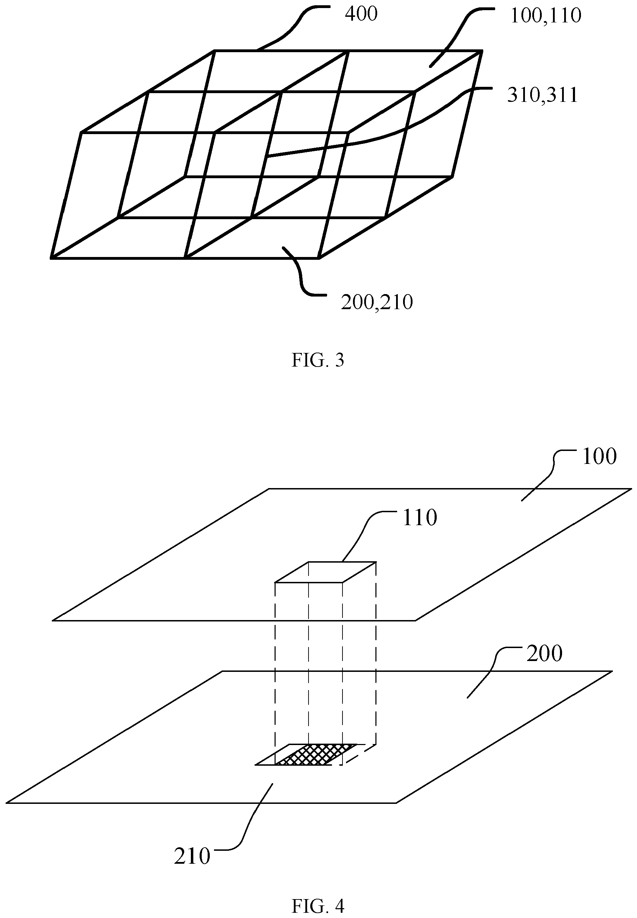

To address the above-referenced defects of the prior art, the invention is a light-transparent fabric, as shown in FIG. 1. The light-transparent fabric consists of two fabric layers which are parallel to each other and spaced apart, and a support layer 300 which connects the two fabric layers together. The support layer 300 is formed of connecting yarns 310. The connecting yarns 310 consist of support threads 311 sandwiched between the two fabric layers and connecting threads 312 woven into the two fabric layers, respectively. The fabric layers are woven from fabric yarns 400 and must contain a number of meshes formed by the fabric yarns 400. The two fabric layers are the first fabric layer 100 and the second fabric layer 200, respectively. The meshes formed in the first fabric layer 100 are the first meshes, while the meshes formed in the second fabric layer 110 are the second meshes. In embodiment of the present invention, 80%-100% of the first meshes align with the second meshes on a one to one basis, i.e., 80%-100% of the first meshes each align with a corresponding second mesh and 80%-100% of the second meshes each align with a corresponding first mesh. When the first meshes 110 align with the second meshes 210 on a one to one basis, i.e., when 100% of the first meshes 110 align with a corresponding second mesh, and 100% of the second meshes align with a corresponding first mesh, as shown in FIG. 2, one of the first meshes 110 forms a constituent unit with the corresponding second mesh 210. FIG. 2 shows four constituent units formed by quadrilateral meshes. In each constituent unit, the first meshes 110 align with the second meshes 210 on a one to one basis, and the corners of each of the first meshes 110 form a straight column with the corners of the corresponding second mesh 310 through the connecting threads 312. When the rate of alignment between the first meshes 110 and the second meshes 210 is greater than or equal to 80% and less than 100%, in each constituent unit, as shown in FIG. 3, the first meshes 110 are set to misalign with the second meshes 210, and the corners of each of the first meshes 110 form a straight column with the corners of the corresponding second mesh 310 through the connecting threads 312. The area of alignment between the first meshes 110 and the second meshes 210 is shown in FIG. 4. As shown in FIG. 4, alignment further refers to the overlap between the projection of the first meshes 110 on the second fabric layer 200 and the second meshes 210 closest to the projection, i.e., the shaded area in FIG. 4, and the area of alignment is equal to the shaded area. If the first meshes 110 are set to align with the second meshes 210 on a one to one basis, or if the first meshes 110 are set to align approximately with the second meshes 210 on a one to one basis so that the first meshes 110 misalign minimally with the second meshes 210, more light can transmit through the light-transparent fabric than is achieved by the prior art.

Furthermore, in embodiments of the invention at least 80% of the support threads in the connecting yarns 310 are arranged in the shape of an "I". Specifically, the support threads 311 arranged in the shape of an "I" are roughly parallel to one another, and the support threads 311 are perpendicular to the first fabric layer 100, or alternatively the support threads 311 are tilted against the first fabric layer 100 as the first meshes 110 align with the second meshes 210. Understandably, the perpendicularity described herein means that the junction between the support threads 311 and the first meshes 110 aligns with the junction between the support threads 311 and the second meshes 210. In other words, the projection of the junction between the support threads 311 and the first meshes 110 on the second fabric layer 200 aligns with the junction between the support threads 311 and the second meshes 210. The bending (as shown in FIG. 1) caused by knitting and yarn stiffness also falls within the range of perpendicularity described herein. Because most support threads 311 of the connecting yarns 310 are roughly parallel to one another and the support threads 311 correspond to the junction between the first meshes 110 and the second meshes 210, the support threads 311 can be maximally brought down, or extended directly downwards, when seen in a direction perpendicular to the first fabric layer 100 so that more light can pass through the light-transparent fabric.

In one embodiment of the invention, all the support threads in the connecting yarns are arranged in the shape of an "I" to create higher transmittance that the prior art. In another embodiment of the invention, some of the support threads in the connecting yarns are arranged in the shape of an "I" while the rest are arranged in one or more other shapes for better support performance, such as a "V" or an "X", or some are in the shape of a "V and others in the shape of an "X". For example, all the support threads in the connecting yarns may be divided such that the first support threads are arranged in the shape of an "I" and the second support threads are arranged in the shape of a "V" and/or an "X". The shape of a "V" is created by the shape of the second support threads being formed by the first threads and the second threads (the first threads are on the left side while the second threads are on the right side). The two upper end points of said V-shape are connected with the connecting threads 312 in the first fabric layer 100 while the two lower end points are connected with the connecting threads 312 in the second fabric layer 200. The shape of an "X" is created by the shape of the second support threads being formed by the third threads and the fourth threads (the threads tilted to the right from the top down are the third threads while the threads tilted to the left from the top down are the fourth threads). The two upper end points of said X-shape are connected with the connecting threads 312 in the first fabric layer 100 while the two lower end points are connected with the connecting threads 312 in the second fabric layer 200. In such embodiments of the invention, the number of the first support threads accounts for more than 80% of the total number of support threads. Moreover, in another embodiment of the invention, wherein the second threads are arranged in the shape of a "V" only, all the first threads are parallel to one another and all the third threads are parallel to one another, while in still another embodiment of the invention, wherein the second threads are arranged in the shape of X only, all the third threads are parallel to one another and all the fourth threads are parallel to one another. In an embodiment of the invention, wherein some of the second threads are arranged in the shape of a "V" and some are arranged in the shape of an "X", all the first threads and third threads are parallel to each other while all the second threads and fourth threads are parallel to each other, making the second support threads as minimally light-blocking as possible. In embodiments of the invention, the second support threads can be used to enhance the support strength of the light-transparent fabric while the transmittance of the three-dimensional spacer fabric is ensured. To minimize the blocking effect of the second support threads on the light-transparent fabric, in a preferred embodiment of the invention, the second support threads are provided on the edge of the light-transparent fabric.

Through the aforesaid structural arrangement, firstly, the first meshes 110 can align with the second meshes 210 as much as possible, and secondly, the support threads 311 can be as perpendicular to the fabric layer as possible so as to effectively increase the light permeability in order that the transmittance of the light-transparent fabric can be greatly improved as compared to that of the prior art.

Because they are roughly parallel to one another and approximately perpendicular to the fabric layers, the support threads 311 are highly deformable under a side force exerted thereupon. To solve this problem, in an embodiment of the invention, the diameter of the connecting yarns 310 is set to greater than the diameter of the fabric yarns 400 while the ratio of the diameter of the connecting yarns 310 to the diameter of the fabric yarns 400 is set to 1.1:1.5. The toughness of the connecting yarns 310 can be effectively improved by increasing the diameter of the connecting yarns 310, thereby ensuring the mechanical properties of the light-transparent fabric, protecting the support threads 311 from being deformed by a side force. Furthermore, the thickness of the support layer 300 (i.e., the length of the support threads 311), affects the support performance of the three-dimensional spacer fabric. In embodiments of the invention, the thickness of the support layer 300 and the connecting yarns 310 are delimited together to ensure the mechanical properties of the light-transparent fabric. Preferably, the ratio of the thickness of the support layer 300 to the diameter of the support threads 311 is set to 6:55, or between such ratio up to the preferable ratio of 18:20.

Furthermore, when the support layer 300 is too thick light scattering will result, and the light transmittance performance will affected (diminished), but when the support layer 300 is too thin comfort of riding upon the light-transparent fabric will be affected (diminished). In a preferred embodiment of the invention, the thickness of the support layer 300 is set to 1-3mm.

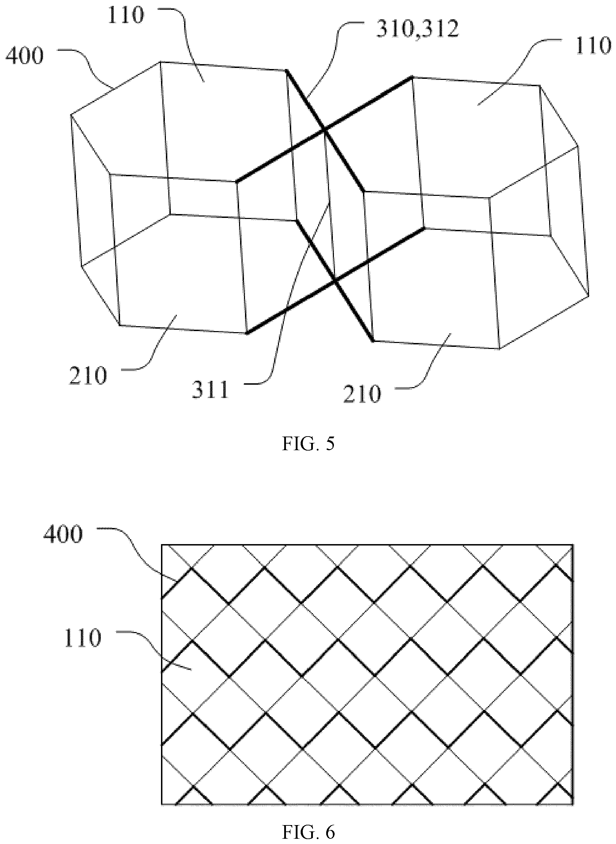

Furthermore, in the invention, the technique for weaving the connecting yarns 310 is improved so as to maximally prevent the connecting yarns 310 from occupying (being positioned within or extending over) the mesh openings when seen from a direction perpendicular to the first fabric layer 100. Such technique prevents the connecting yarns 310 from blocking light. Specifically, the connecting threads 312 in the connecting yarns 310 stretch along the sides of the meshes, and as the meshes in most embodiments of the present invention are a type of polygon-shape, the connecting threads 312 in the connecting yarns 310 stretch in zigzags along the sides of such polygon-shape. For example, FIG. 5 shows constituent units in which two adjacent meshes are hexagonal, and the thick lines in FIG. 5 indicate where the connecting yarns 310 shared by two adjacent constituent units stretch in zigzags, i.e., the location of the connecting threads 312. In this way, the connecting threads 312 will not extend over the mesh openings, with the result that more light should be transmitted.

In embodiments of the invention, a colorant, such as titanium dioxide, is added in the spinning process of the fabric yarns 400 and connecting yarns 310. In preferred embodiments of the invention, the fabric yarns 400 and connecting yarns 310 are uncolored in order to improve the transparency of the light-transparent fabric. In embodiments of the invention, the fabric yarns 400 and connecting yarns 310 are made of transparent or semitransparent monofilaments, such as polyethylene terephthalate (PET), which is a transparent material, so that the transmittance of the fabric yarns 400 and connecting threads 310 reaches up to 50%-70%. Understandably, "semitransparent" here means that light is allowed to pass through, but this does not necessarily comply with the Snell's law. In other words, a semitransparent medium allows of light transmission, while a transparent medium not only permits of light transmission, but also admits of image formation.

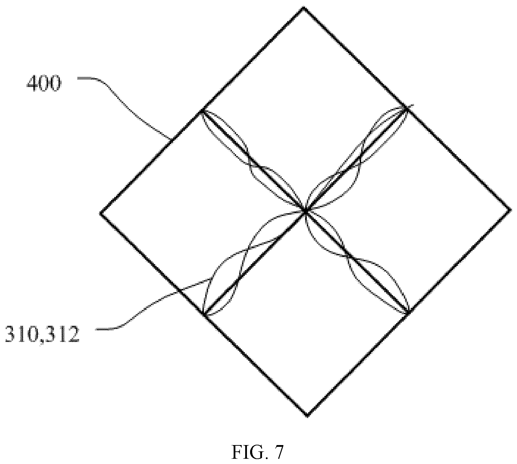

To improve the transmittance of the light-transparent fabric, in prior art, the mesh density needs to be minimized so that more light can transmit through the light-transparent fabric, because excessively high mesh density blocks light severely. However, through testing the applicant has found that extremely low mesh density seriously affects the support capacity and elasticity of the light-transparent fabric, and that, to ensure the support capacity and elasticity of the light-transparent fabric, it is imperative to increase the thickness of the fabric yarns 400 or the overall thickness of the sides of the meshes beyond the prior art. The result of such increases is that the meshes will easily show their contour on the surface of the artificial leather in light, looking unsightly. In addition the applicant found that, when transmittance is improved, the elasticity and support capacity must be ensured in order to keep the automotive interior comfortable. In the invention, the aforesaid requirements are meet by delimiting the number of the yarns that form the sides of the meshes, the mesh density, the mesh size and the yarn diameter. Specifically, the sides of the meshes can consist of the fabric yarns 400 only, or consist of both fabric yarns 400 and connecting threads 310. The diameter of the fabric yarns 400 is set to 0.05-0.1mm, further in preferred embodiments of the invention it is set to 0.06-0.08 mm. In embodiments of the invention, a side of a mesh consists of at most 7 yarns, including at most 3 fabric yarns 400 and at most 4 connecting yarns 310, i.e., the connecting yarns 310 stretch in zigzags along the polygonal-shape side 4 times at most. For example, in the embodiment of the invention shown in FIG. 7, the thick lines represent the fabric yarns 400, and the thin lines represent the connecting threads 312. As shown in FIG. 7, the connecting threads 312 on the side formed by the top-left fabric yarns 400 and the connecting threads 312 on the side formed by the two fabric yarns 400 below both stretch in zigzags twice, while the connecting threads 312 on the side formed by the top-right fabric yarns 400 stretch in zigzags three times. Understandably, the thick and thin lines are shown in FIG. 7 for the purpose of distinguishing between the fabric yarns and the connecting threads rather than to define the relational thickness between them. Furthermore, each of the meshes is, in an embodiment of the invention, set as a polygon-shape, and in each side of the polygon-shape, there are at most 3 fabric yarns 400 and there can be the same number or a different number of fabric yarns 400 in each side. For example, in a preferred embodiment of the invention, as shown in FIG. 6, the meshes are quadrilateral, and there are 2 fabric yarns 400 (each thick line in FIG. 6 represents 2 fabric yarns 400) in either of two adjacent sides, while there is 1 fabric yarn 400 (each thin line in FIG. 6 represents 1 fabric yarn 400) in either of the other two adjacent sides. As another example, in an embodiment of the invention, the meshes are hexagon-shaped, and because the hexagon-shape is more structurally stable, a smaller number of fabric yarns 400 can be adopted under the premise of ensuring the support capacity, and the number of the fabric yarns 400 in each side of the hexagon can be set to 1. In another embodiment of the invention, the number of meshes is greater than 10 meshes, and in a preferred embodiment of the invention, the number of meshes is greater than 14 meshes. For example, in an embodiment of the invention, wherein a mesh is quadrilateral-shaped, the side length of the quadrilateral-shape is set to 0.9-1.1mm. In embodiments of the invention, The ratio of the maximum span size of the meshes to the diameter of the fabric yarns 400 is set to 8:32.

Due to the aforesaid arrangement, the transmittance of the light-transparent fabric of embodiments of the invention can be higher than 70% (understandably, because there are many parallel-aligned meshes in the light-transparent fabric, the transmittance of the light-transparent fabric is up to 100% at the parallel-aligned meshes, while the transmittance of the light-transparent fabric is 50%-70% where there are unaligned yarns. The transmittance described herein refers to the average unit-area transmittance of the light-transparent fabric).

Further, and embodiment of the invention is an artificial leather, which consists of monolayers of leather affixed to each other and to the light-transparent fabric described herein. As the light-transparent fabric is of the structure described herein, the transmittance of the artificial leather formed thereof is greater than 8%. The artificial leather can be used in automotive interiors, such as seats, roofs and center consoles. In this manner, a light source can be provided at sites cladded with artificial leather, such as the vehicle body skeleton frame, and when such light is off, the interior will look normal, but when such light is on, the artificial leather will produce a transmitting effect.

The monolayer leather therein can be processed with the light-transparent fabric by holistic processing technology. For example, the monolayer leather consists of an epidermal layer, a support layer and a glue layer. When the glue layer is not dry yet, the light-transparent fabric is affixed to the glue layer so that both can be bonded together. The transmittance of the artificial leather of this structure is up to 9%-17%.

Of course, the monolayer leather can be prepared first and then bonded to the light-transparent fabric through transparent glue. In one embodiment of the invention, the monolayer leather consists of an epidermal layer, a support layer, a glue layer and a fabric layer. Therein, the fabric layer may be, for example, a knitted fabric or non-woven fabric. The fabric layer is bonded to the light-transparent fabric by transparent glue. The transmittance of the artificial leather of this structure is up to 8%-15%. Since the arrangement of the fabric layer affects the transmittance to some extent, preferably, the glue layer and the fabric layer can be omitted, while the light-transparent fabric is used as the support structure of the monolayer leather. Specifically, the monolayer leather comprises an epidermal layer and a support layer, of which the support layer is bonded to the light-transparent fabric through transparent glue, thus further improving the transmittance of the artificial leather. The transmittance of the artificial leather in this structural form can reach 10% to 18 %.

Understandably, the above-mentioned glue layer is a material layer prepared by a single-layer leather preparation technique, such as calendering technology or release paper coating technology, and is part of the single-layer leather. The raw materials of the glue layer include PVC powder, as well as a plasticizer and stabilizer. The above-mentioned transparent glue refers to a type of glue with high transparency, such as a hot melt adhesive. It should be applied to the monolayers of leather after leather preparation so that it can be bonded to the translucent fabric.

Furthermore, embodiments of the invention also provide an automotive interior that comprises the light-transparent fabric or artificial leather disclosed herein, which improves the transparency of the automotive interior.

Those skilled in the art will recognize that under the premise of no contradiction, the aforesaid preferred embodiments can be freely combined together or superimposed over one another.

It should be understood that the embodiments of the invention disclosed herein are exemplary embodiments only, not restrictive embodiments at all. Any obvious or equivalent modification or replacement of the above details made by those skilled in the art without deviating from the basic principles of the invention will be included in the scope of the claims of the invention.

## Claims

1. A light-transparent fabric consisting of:
two fabric layers which are parallel to each other and spaced apart, said fabric layers being woven from fabric yarns and containing multiple meshes formed by the fabric yarns.; and
a support layer which connects the two fabric layers together, said support layer being formed of connecting yarns, and said connecting yarns consisting of support threads extending between the two fabric layers and connecting threads woven into the two fabric layers; and
wherein the light-transparent fabric is characterized 80%-100% of the multiple meshes of one of the two fabric layers each align with one of the multiple meshes of a second of the two fabric lawyers on a one to one basis;
wherein at least 80% of the support threads in the connecting yarns are arranged as I-shaped; and
wherein the connecting yarns diameter ration to the fabric yarns diameter is 1.1:1.5.

2. The light-transparent fabric of claim 1, **characterized in that** the multiple meshes are each a polygonal-shaped mesh, and that there are at most 3 fabric yarns in in each side of each polygon-shaped mesh.

3. The light-transparent fabric of claim 1, **characterized in that** the fabric yarns and connecting yarns are each formed of transparent or semitransparent monofilaments.

4. The light-transparent fabric of claim 1, **characterized in that** each of the multiple meshes maximum span size ratio to the fabric yarns diameter is 8:32.

5. The light-transparent fabric of claim 2, **characterized in that** the connecting threads in the connecting yarns stretch in zigzags along the sides of the polygon-shape mesh.

6. The light-transparent fabric of claim 5, is **characterized in that** the connecting threads stretch in zigzags along any side of the polygon-shaped mesh 4 times at most.

7. The light-transparent fabric of claim 1, **characterized in that** the fabric yarns and connecting yarns are uncolored yarns.

8. The light-transparent fabric of claim 1, **characterized in that** the multiple meshes are more than 10 meshes in number.

9. The light-transparent fabric of claim 1, **characterized in that** transmittance of the fabric yarns and the connecting threads ranges from 50% to 70%, respectively.

10. The light-transparent fabric of any of claims 1-9, is **characterized in that** all of the support threads in the connecting yarns are arranged in an I-shape; or the support threads in the connecting yarns are divided into first support threads arranged in an I-shape and second support threads arranged in a V-shape and/or an X-shape.

11. The light-transparent fabric of any of claims 1-9, **characterized in that** the fabric yarns range in diameter from 0.05mm to 0.1mm.

12. The light-transparent fabric of any of claims 1-9, **characterized in that** the connecting yarns range in diameter from 0.055mm to 0.15mm.

13. The light-transparent fabric of claim 12, **characterized in that** the support layer thickness ratio to the support threads diameter is 6:55.

14. The light-transparent fabric of any of claims 1-9, **characterized in that** the support layer thickness ranges from 1mm to 3mm.

15. The light-transparent fabric of Claim 12, **characterized in that** transmittance of the light-transparent fabric is greater than or equal to 70%.

16. An artificial leather consisting of monolayers of leather affixed to each other and to a transparent fabric of any of claims 1-15.

17. An automotive interior incorporating a light-transparent fabric of any of claim 1-15 or an artificial leather of in claim 16.
